# FASCICULE DE BREVET EUROPEEN

(11) **EP 3 765 421 B1**
(45) Date de publication et mention de la délivrance du brevet: **22.04.2026**
(21) Numéro de dépôt: 19715174.9
(22) Date de dépôt: 13.03.2019
(51) Int. Cl.: C03B 37/04, C03B 37/07, G01J 5/00

(54) **METHODE DE REGULATION D'UNE INSTALLATION DE FIBRAGE**
VERFAHREN ZUR STEUERUNG EINER FASERZIEHEINRICHTUNG
METHOD FOR CONTROLLING A FIBRE DRAWING FACILITY

(30) Priorité: 14.03.2018 FR 1852204
(43) Date de publication de la demande: 20.01.2021
(73) Titulaire: SAINT-GOBAIN ISOVER, 92400 Courbevoie (FR)
(72) Inventeur: OUERGHEMMI, Ezzeddine, 92160 Antony (FR); LIEBERKNECHT, Hans Michael, 60280 Margny Les Compiegne (FR); DEPUILLE, Jean-Dominique, 60600 Agnetz (FR)
(74) Mandataire: Saint-Gobain Recherche
(86) Numéro de dépôt international: PCT/FR2019/050545
(87) Numéro de publication internationale: WO 2019/175503

(56) Documents cités:
- EP-A2- 0 479 675
- DE-C1- 3 536 137

## Description

La présente invention est relative au domaine des dispositifs de fibrage.

### ART ANTÉRIEUR

Les fibres de verre dites d'isolation sont couramment produites par centrifugation interne, c'est-à-dire en introduisant un filet de verre fondu dans un centrifugeur encore appelé assiette de fibrage, tournant à grande vitesse et présentant à sa périphérie un très grand nombre d'orifices. Sous l'action de la force centrifuge le verre est projeté au travers de ces orifices sous forme de filaments. A la force centrifuge vient éventuellement s'ajouter un étirage par un courant gazeux à température et vitesse élevées, émis tangentiellement à la paroi perforée de la bande périphérique du centrifugeur. Dans ces techniques, le centrifugeur est très fortement sollicité par des contraintes d'origine mécanique (vitesse de rotation élevée), thermique (verre autour de 1000 °C) et chimique (corrosion par le verre fondu).

Ces contraintes exercées sur le centrifugeur entrainent une détérioration de celui-ci, c'est-à-dire une usure qui se matérialise, par exemple, par une variation des dimensions de ses orifices.

Or, la qualité des fibres produites dépend très étroitement du bon fonctionnement du centrifugeur, c'est-à-dire de ce bon état général et d'un respect des consignes de vitesse et de température.

Aujourd'hui, il est connu de limiter l'usure du centrifugeur en jouant sur la température. En effet, pour une meilleure longévité, un contrôle de la température en haut et bas de bande, ainsi que le profil le long de la bande peut être suivi.

Une méthode de contrôle connue du document EP 0 479 675 A2 consiste à mesurer la température de l'assiette de fibrage en différent points pour ensuite la réguler en modifiant la vitesse de rotation de l'assiette et/ou en modifiant la température du verre en fusion.

Ces points spécifiques sont localisés en mesurant, via un capteur de température, la température de l'assiette.

Ce capteur est un pyromètre dont au moins une partie est montée pivotante et balaye un angle interceptant l'axe vertical de symétrie du dispositif de fibrage de façon à couvrir par un mouvement continu de va-et-vient toute la hauteur de la bande périphérique. A chaque balayage de la bande périphérique, on détermine la coordonnée verticale de chaque point mesuré et on enregistre le profil de température en coordonnées verticales sur la hauteur de la bande. Ce profil comporte trois points remarquables A, B et C correspondant respectivement au point le plus haut de la bande, au point le plus chaud et au point bas ou bas de bande. Il est à noter que le point A ne correspond pas dans tous les cas à un extrémum de la courbe mais sa coordonnée verticale peut être retrouvée par rapport au positionnement du point C, l'écart entre A et C correspondant exactement à la hauteur de la bande périphérique. Les points B et C sont repérés par analyse de la courbe dérivée de la courbe correspondant au profil de température en utilisant des coordonnées verticales. La méthode de contrôle connue détermine les températures et coordonnées des points remarquables de la bande (points haut et bas et point le plus chaud), par analyse de la courbe dérivée de la courbe correspondant au profil de température sur la hauteur de la bande périphérique
Or, l'utilisation de ces coordonnées verticales présente l'inconvénient d'entrainer une imprécision de régulation dans le temps. En effet, l'assiette de fibrage subit une usure dans le temps de sorte que la coordonnée verticale de chaque point varie dans le temps. Ainsi, la régulation se fait sur des points qui ne sont plus les points remarquables désirés.

De plus, l'assiette de fibrage peut vibrer lors de son fonctionnement. Ces vibrations impliquent, comme pour le cas de figure de l'usure, que les points utilisés pour la régulation ne sont pas les points remarquables désirés.

### RÉSUMÉ DE L'INVENTION

La présente invention se propose donc de résoudre ces inconvénients en fournissant un procédé de fibrage permettant la régulation plus efficace et une meilleure longévité.

A cet effet, l'invention concerne un procédé selon la revendication 1.

Le procédé de détermination de points spécifiques d'une assiette de fibrage permet avantageusement de fournir des points fiables. En effet, le procédé de détermination de points spécifiques d'une assiette de fibrage selon l'invention permet de s'affranchir de l'usure et/ou des vibrations que subit l'assiette de fibrage. Pour cela, le procédé de détermination selon l'invention se base sur l'analyse de la variation de la pente de la courbe (température, position) et utilise la dérivée seconde d'une courbe représentative de la température en fonction de la position angulaire d'un dispositif de mesure de la température et non pas des coordonnées verticales changeantes avec lesdites vibrations ou l'usure.

Selon l'invention, la condition prédéfinie consiste à avoir la valeur de la dérivée seconde égale à zéro.

Selon un exemple, ce procédé de détermination comprend une étape de recherche supplémentaire consistant à rechercher le point spécifique caractérisé par le fait que la température y est à son maximum.

Selon un exemple, les mesures de températures sont opérées pendant un intervalle régulier puis moyennées avant l'étape de traitement.

Selon un exemple, ledit intervalle de prise de mesures est compris entre 2 et 5 secondes, préférentiellement de 3 secondes
L'invention concerne en outre un procédé de contrôle de la fabrication de fibre minérale par un procédé de fibrage utilisant un dispositif de fibrage pour fabriquer des fibres minérales, le dispositif de fibrage comprenant une assiette de fibrage percée pour permettre générer des fibres par centrifugation et un bruleur annulaire générant un courant gazeux annulaire pour étirer les fibres, ledit procédé comprenant les étapes suivantes :
- effectuer des mesures de températures de l'assiette de fibrage au moyen d'un dispositif de mesure de la température, selon différentes positions angulaires du dispositif de mesure de la température;
- déterminer au moins un point spécifique utilisant le procédé de détermination selon l'une des revendications précédentes
- comparer la température mesurée à une valeur prédéterminée pour ce point spécifique;
- générer au moins un premier signal de commande pour réguler la température du dispositif de fibrage audit point spécifique au moyen d'un premier organe de régulation.

Selon un exemple, un second point spécifique est déterminé et régulé.

Selon un exemple, le dispositif de fibrage comprend un premier moyen de variation de la température du premier point spécifique.

Selon un exemple, le dispositif de fibrage comprend un second moyen de variation de la température du second point spécifique.

Selon un exemple, ladite assiette de fibrage comprend une paroi annulaire percée d'une pluralité d'orifices et prolongée latéralement par une partie supérieure et une partie inférieure, et dans lequel au moins un point spécifique est déterminé parmi le point de l'arrondi qui se trouve à la jonction entre la partie perforée de la bande périphérique et une partie supérieure prolongeant latéralement la bande périphérique, le point chaud correspondant au point où la température est la plus élevée et le point bas.

Selon un exemple, la régulation de la température est faite sur au moins deux des points spécifiques déterminés : un premier point spécifique étant le point bas et un second point spécifique étant le point de l'arrondi.

L'invention concerne en outre un programme d'ordinateur comportant des instructions pour l'exécution des étapes d'un procédé de détermination de points spécifiques ou des étapes d'un procédé de de régulation d'une assiette de fibrage lorsque ledit programme est exécuté par un ordinateur.

L'invention concerne en outre un support d'enregistrement lisible par un ordinateur sur lequel est enregistré un programme d'ordinateur comprenant des instructions pour l'exécution des étapes d'un procédé de détermination de points spécifiques ou des étapes d'un procédé de de régulation d'une assiette de fibrage.

### DESCRIPTION DES FIGURES

D'autres particularités et avantages ressortiront clairement de la description qui en est faite ci-après, à titre indicatif et nullement limitatif, en référence aux dessins annexés, dans lesquels:

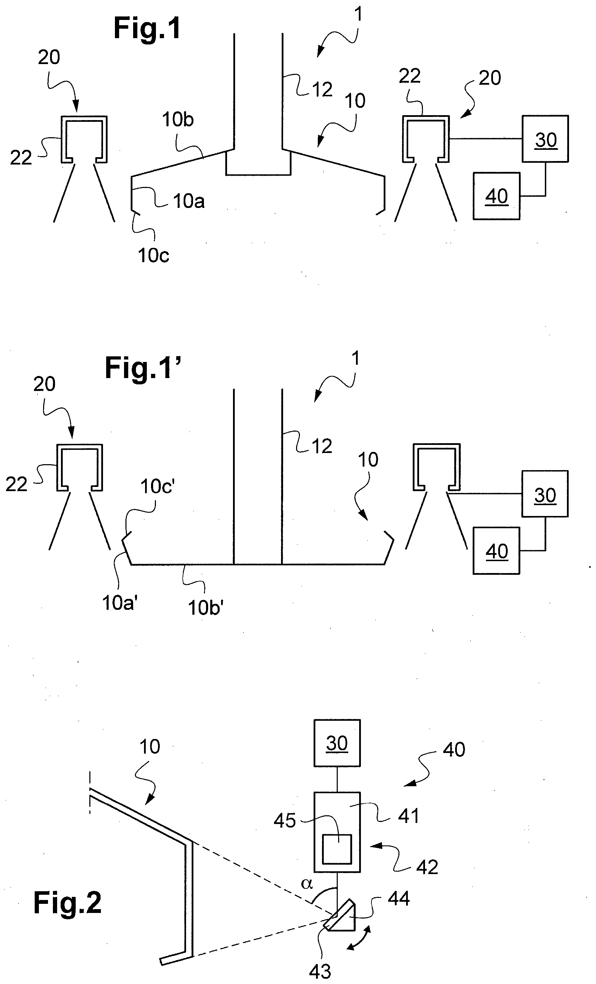

- la fig. 1 est une représentation schématique d'un système de fibrage selon l'invention;
- la fig. 1' est une représentation schématique d'une variante de centrifugeur du système de fibrage;
- la fig. 2 est une représentation schématique d'un module capteur selon de l'invention;
- la fig. 3 est une représentation schématique d'un diagramme de température en fonction de la position de l'assiette de fibrage;
- la fig. 4 est une représentation schématique des points spécifiques sur une assiette de fibrage;
- la fig. 5 est une représentation schématique d'un système de fibrage avec un moyen de variation de la température de l'assiette selon l'invention;
- la fig. 6 est une représentation schématique d'un système de fibrage avec deux moyens de variation de la température de l'assiette selon l'invention;

### DESCRIPTION DETAILLÉE DE L'INVENTION

A la figure 1 est représenté un système de fibrage 1. Un tel système de fibrage comprend un centrifugeur encore appelé assiette de fibrage 10 fixé sur un arbre 12, tournant à grande vitesse et présentant à sa périphérie un très grand nombre d'orifices. Sous l'action de la force centrifuge, le verre est projeté au travers de ces orifices sous forme de filaments. Bien entendu, le centrifugeur pourra être de tout type : avec fond comme visible à la figure 1' ou sans fond comme visible à la figure 1.

L'assiette de fibrage 10 est un dispositif de centrifugation interne de fibres minérales de diamètre micrométrique. Une assiette de fibrage 10 comprend une paroi annulaire 10a percée d'une pluralité d'orifices, prolongée latéralement par une partie supérieure et une partie inférieure. Dans une première configuration, à la figure 1, la partie supérieure est un voile 10b reliant l'assiette à l'arbre d'entraînement et la partie inférieure est une lèvre intérieure 10c repliée en direction de l'arbre d'entraînement. Dans une seconde configuration dite d'assiette à fond, représentée à la figure 1', la partie supérieure est une lèvre intérieure 10c' repliée en direction de l'arbre d'entraînement et la partie inférieure est un voile 10b' formant le fond de l'assiette 10'.

Cette assiette de fibrage est chauffée par un module de chauffage 20. Le module de chauffage 20 comprend au moins un brûleur 22 permettant l'étirage de la fibre. Ce brûleur à combustion interne comporte une chambre de combustion alimentée en combustible et en comburant, la chambre comportant une enveloppe (pourvue d'une première extrémité fermée et d'une seconde extrémité opposée d'échappement ouverte par laquelle s'échappent les gaz de combustion, l'enveloppe présentant au moins deux parois opposées qui relient les deux extrémités. Le brûleur comporte dans la chambre et au niveau de la première extrémité fermée, au moins un dispositif de combustion alimenté en comburant et en combustible.

Au moyen du brûleur, les filaments projetés sous l'effet de la force centrifuge sont alors soumis à l'action d'un courant annulaire gazeux d'étirage à température et vitesse élevées longeant la paroi du centrifugeur qui les amincit et les transforme en fibres.

Ce module de chauffage 20 est piloté par une unité de calcul 30. Une telle unité de calcul 30 consiste par exemple en un ordinateur muni d'une interface permettant à l'opérateur de régler le système de fibrage. L'unité de calcul 30 est donc connectée au module de chauffage 20 afin de lui envoyer des commandes.

Le système de fibrage 1 comprend en outre un module capteur 40, tel que représenté à la figure 2. Un tel module capteur 40 comprend un capteur de température 41 et est connecté à l'unité de calcul 30.

Le capteur de température utilisé est un capteur de type pyrométrique. Un tel capteur pyrométrique utilise le rayonnement infrarouge. En effet, un thermomètre/pyromètre IR mesure la température par quantification de l'énergie radiative émise dans l'infrarouge en se basant sur le fait que tout objet au-dessus du zéro absolu (0 K) émet ces radiations. En connaissant la quantité d'énergie émise par un objet, et son émissivité, sa température peut donc être déterminée. Schématiquement, le principe consiste à mesurer l'énergie lumineuse située dans l'infrarouge par un détecteur la convertissant en un signal électrique. Une lentille permet de focaliser le rayonnement IR sur le détecteur. Cette méthode permet avantageusement de mesurer la température à distance.

Le capteur de température IR est associé à un système de miroir visible à la figure 2. Un tel système de miroir permet de diriger le rayonnement infrarouge depuis n'importe quel point vers le détecteur. Le système de miroir 42 comprend un miroir 43 monté pivotant sur un support 44. Ce montage pivotant du miroir 43 lui permet de diriger le rayonnement IR de différents points de l'assiette de fibrage comme visible à la figure 2 principalement dans un plan vertical de l'assiette s'étendant dans une direction parallèle à l'axe de rotation de l'assiette et dans une direction orthogonale à celle-ci. Toutefois, le capteur de température peut être utilisé seul et est lui-même monté pivotant.

Cette capacité de l'ensemble comprenant le pyromètre et le miroir à mesurer la température en différents points permet d'obtenir un relevé de température de l'assiette de fibrage. Ce relevé de température est utilisé par l'unité de calcul 30 pour réguler la température.

Pour obtenir ce relevé, une première étape du procédé de contrôle de la fabrication de fibre minérale selon l'invention consiste à utiliser le pyromètre (plage de mesure 500-2000°C) et le miroir oscillant. Le miroir 43 est mis en oscillation avec une certaine fréquence pour balayer l'assiette de fibrage 10 et obtenir des mesures de la température en fonction de la position angulaire α du miroir. Ces mesures peuvent être traitées par une unité de calcul interne 45 audit module capteur 40 pour fournir directement une courbe de la température en fonction de la position angulaire du miroir ou, être envoyées à l'unité de calcul 30 à laquelle est connecté le module capteur 40 pour être traitées et obtenir une courbe de la température en fonction de la position angulaire α du miroir .

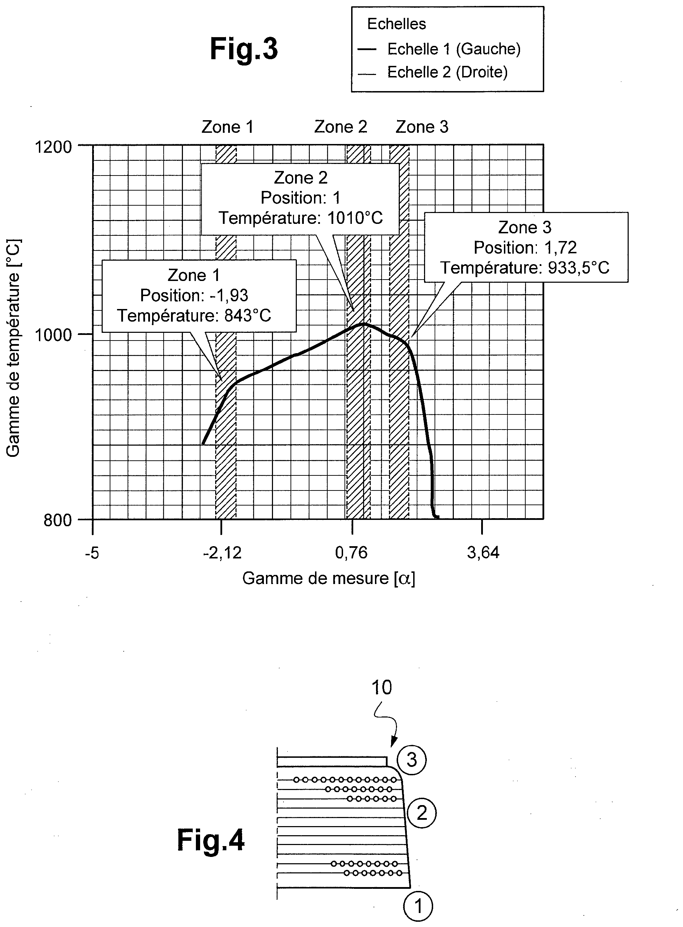

On obtient alors la courbe de la figure 3 représentative d'une assiette selon la figure 1.

Ces mesures de la température sont effectuées en permanence. Pour lisser la courbe et s'affranchir du bruit, il est possible de lisser la courbe de la température en fonction de la position angulaire. Pour cela, les mesures effectuées dans un intervalle régulier prédéfini sont moyennées, cette intervalle sera compris entre 2 et 5 secondes, préférentiellement de 3 secondes. On comprend donc que les mesures sont stockées dans une mémoire durant un laps de temps puis moyennées.

Dans une seconde étape du procédé de contrôle, cette courbe est traitée par l'unité de calcul 30 afin d'extraire au moins un point spécifique selon la méthode de détermination de points spécifique selon l'invention.

La méthode de détermination comprend une première étape consistant à se munir des mesures de températures de l'assiette de fibrage obtenues au moyen d'un dispositif de mesure de la température 40.

Une seconde étape de la méthode de détermination consiste à procéder au traitement des données par l'unité de calcul 30, pour calculer et obtenir la dérivée seconde de la courbe de la température en fonction de la position angulaire du miroir 43. Cette dérivée seconde est utilisée pour rechercher des points caractéristiques/spécifiques. En effet, la dérivée seconde permet d'obtenir la variation de la pente.

Dans une troisième étape de la méthode de détermination, la dérivée seconde de la courbe de la température en fonction de la position angulaire du miroir 43 est analysée, par l'unité de calcul 30, pour rechercher les points spécifiques. Ces points spécifiques sont les points pour lesquels la dérivée seconde remplit une condition prédéfinie. Selon l'invention, cette condition est que la valeur de la dérivée seconde est égale à zéro. Cette condition est caractéristique des points hauts et bas d'une assiette de fibrage qui correspondent à des points extrêmes de la courbe.

Il est ensuite possible de définir à quoi correspond le point spécifique/caractéristique. On comprendra que les points représentatifs du bas de bande de l'assiette et de l'arrondi de l'assiette sont de part et d'autre dudit point chaud, aux extrema locaux de la courbe.

Dans le cas présente invention, deux points spécifiques/caractéristiques (qui correspondent aux zones 1 et 3 de la figure 4) sont recherchés. Un premier point spécifique correspond à la température de bas de bande de l'assiette (zone 1) et un second point spécifique correspond à l'arrondi de l'assiette (zone 3) comme visible à la figure 4.

De plus, une quatrième étape facultative de la méthode de détermination peut être opérée. Cette quatrième étape facultative consiste à trouver le point chaud de l'assiette de fibrage. Pour cela, l'unité de calcul 30 cherche le maximum absolu de la courbe qui correspond audit point chaud. Ce point chaud est le point spécifique/caractéristique central (zone 2), agencé entre les points correspondent à la température de bas de bande de l'assiette (zone 1), à l'arrondi de l'assiette (zone 3).

Cette utilisation de la dérivée seconde permet avantageusement d'être indépendant des fluctuations des dimensions de l'assiette. En effet, l'assiette peut voir ses dimensions varier avec l'usure et/ou les vibrations. Or, malgré cette variation des dimensions de l'assiette, sa forme générale reste identique. De ce fait, les points spécifiques/caractéristiques perdurent. Cela permet de toujours être en mesure de bien identifier les points spécifiques. Ainsi, la régulation qui en découle se fait toujours sur des points spécifiques précis et réellement représentatifs de l'assiette. On comprend bien que ce calcul de dérivée seconde et l'utilisation d'une courbe de la température en fonction de la position angulaire du miroir sont dépendants. En effet, l'utilisation d'une courbe de la température en fonction de la position angulaire du miroir permet d'obtenir un profil de température qui se soustrait aux variations de dimensions de l'assiette causées par son usure ou sa déformation lors de son fonctionnement à causes de contraintes thermique. L'utilisation de la dérivée seconde permet, sur ce profil de température, de toujours trouver les points spécifiques recherchés. Cela permet alors d'utiliser une régulation automatique c'est-à-dire sans qu'un opérateur n'intervienne pour opérer des calculs supplémentaires pour obtenir le résultat souhaité.

Dans une phase ultérieure du procédé de contrôle, les valeurs de températures des points particuliers sont utilisées pour une régulation de l'assiette de fibrage 10.

En effet, la température des trois points spécifiques de l'assiette de fibrage c'est-à-dire le point bas de bande de l'assiette, le point chaud et le point de l'arrondi de l'assiette doivent être compris dans un intervalle prédéfini. Dans le cas de l'exemple de la figure 1, les températures prédéfinies sont, à titre indicatif
- Pour le bas de bande (zone 1): 905-930 °C
- Pour l'arrondi (zone 3) : 960-990 °C
- Pour le point chaud (zone 2): 960-980 °C
Ces températures prédéfinies constituent des valeurs seuils utilisées pour être comparées aux températures mesurées.

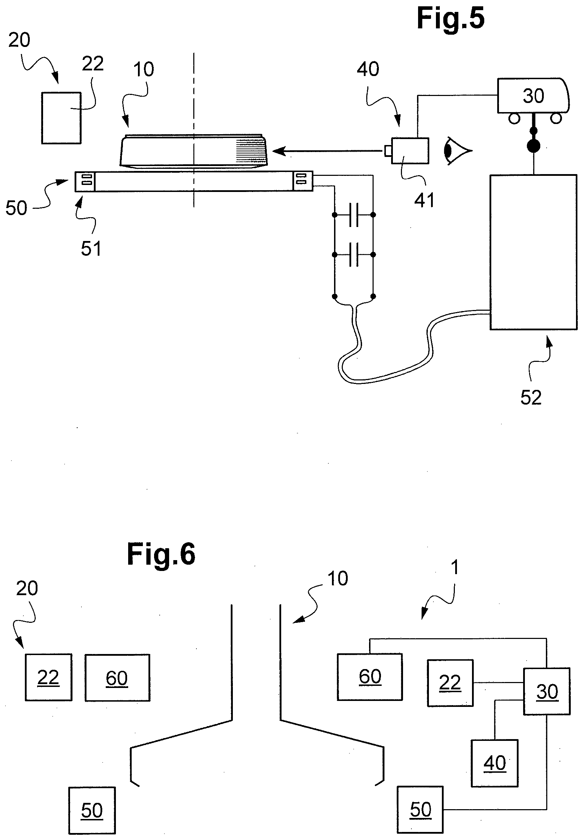

Dans une première boucle de régulation, le premier point spécifique ou point de bas de bande de l'assiette 10 est régulé. Pour cela, la première boucle de régulation agit sur un premier moyen de variation de la température 50 comme visible à la figure 5. Dans ce cas présent, le premier moyen de variation de la température 50 est un moyen permettant la variation de la température de l'assiette de fibrage et comprend une bobine d'induction 51 connectée à un générateur de fréquence 52 visible à la figure 5 qui sert de premier moyen de variation de la température. Ce générateur de fréquence 52 génère un signal SI envoyé à la bobine d'induction 51. C'est ce signal qui permet de moduler la puissance d'induction de la bobine d'induction 52 et qui permet de faire varier la température de chauffage. Pour rappel, la bobine d'induction 51, lorsqu'elle est parcourue par le signal SI qui est un courant électrique modulé en fréquence, génère un champ magnétique qui, à son tour, induit des courants électriques dans le métal à proximité. Les pertes par courants de Foucault et par hystérésis produites dans ce métal génèrent l'énergie thermique (chaleur) par effet Joule. Cette bobine d'induction 51 est agencée dans la partie basse de l'assiette de fibrage, et plus particulièrement sous l'assiette de fibrage. Cette bobine d'induction est agencée pour être en regard du filet de fibres crée par ladite assiette afin de pouvoir localement chauffé cette zone basse de l'assiette.

Un exemple de boucle de régulation consiste à comparer la température mesurée au bas de bande de l'assiette (zone 1) et de la comparer à une température de consigne, un premier signal de commande étant généré par l'unité de calcul. Ce signal de commande détermine la puissance d'alimentation qui est envoyée dans la bobine, cette puissance étant dépendante du courant et de la fréquence. Dans le cas présent, l'incrément désiré est de 1°C.

Dans une seconde boucle, par exemple, la température du second point spécifique ou point de l'arrondi est régulée. Pour cela, un second moyen de variation de la température 60 est utilisé comme visible à la figure 6. Dans un exemple non limitatif, ce second moyen de variation de la température 60 est un moyen de circulation d'air comprenant une partie aspiration et une partie soufflage. Plus précisément, le moyen de circulation d'air selon l'invention est un moyen utilisé pour contrôler l'évacuation des fumées générées par le bruleur. Effectivement, il a été constaté que le débit de ses fumées influence sensiblement la température d'arrondi d'assiette. Par conséquent, le moyen de circulation d'air selon la présente invention est un moyen permettant de diminuer ou d'augmenter l'évacuation de la fumée afin de modifier la température de l'arrondi d'une assiette de fibrage.

Ce moyen de circulation d'air comprend un moyen de variation de flux pouvant être une ou deux turbines ou une paire de buse d'injection d'air. Dans les deux cas, le but est ici de générer un flux d'air qui va s'additionner au flux d'évacuation de fumées, ce flux additionnel sera positif ou négatif c'est-à-dire qu'il permet, s'il est positif, d'augmenter ce flux d'évacuation ou qu'il permet, s'il est négatif, de le ralentir. La partie soufflage permet ainsi de générer un flux additionnel négatif alors que la partie aspiration génère un flux additionnel positif.

Cette seconde boucle compare la température mesurée à l'arrondi pour la comparer à une température de consigne, un second signal de commande étant généré par l'unité de calcul 30. Outre le fait de jouer sur la température de l'air qui est injecté ou aspiré, il est possible d'ajuster la température en jouant sur le débit de l'air utilisé dans le soufflage ou l'aspiration. Pour cela, une solution consiste à jouer sur l'ouverture de vannes via le second signal généré par l'unité de calcul. Chaque partie du dispositif de circulation d'air comprend une électrovanne. Cette électrovanne peut s'ouvrir plus ou moins selon le courant qui lui est appliqué. Par conséquent, il devient possible de modifier le débit d'air en modifiant l'ouverture desdites vannes. Cela permet donc une modification précise de la température.

Bien entendu, il est envisageable que les deux boucles de régulation puissent fonctionner en parallèle ou successivement l'une de l'autre. De plus, il est envisageable que le dispositif de fibrage selon l'invention ne comprend que l'une des deux boucles.

Avoir les deux boucles c'est-à-dire être capable de jouer sur la partie basse et sur la partie haute de l'assiette de fibrage 10, on peut découpler la température de l'assiette et son profil sur la bande de la température des gaz de combustion. On peut ainsi conserver la qualité des fibres produites, car on ne joue pas sur le brûleur externe.

Le procédé de détermination de points spécifiques et le procédé de régulation se présentent chacun sous la forme d'un programme d'ordinateur comportant des instructions pour l'exécution des étapes desdits procédés lorsqu'il est exécuté par un ordinateur.

Les programmes sur le procédé de détermination de points spécifiques et sur le procédé de régulation sont stockés sur un support d'enregistrement lisible par un ordinateur. Ce support peut être un CD ou DVD ou une mémoire flash ou tout autre support possible comme le cloud.

Afin d'avoir une régulation la plus lisse possible, il sera avantageusement prévu que l'action sur les différentes vannes du dispositif de circulation d'air soit opérée afin que les vannes ne soient pas commandées simultanément. En effet, une régulation, dans laquelle l'ouverture des vannes pour le soufflage d'air et pour l'aspiration d'air serait modifiée simultanément, serait instable avec une température qui serait fluctuante et aurait un impact sur la qualité des fibres. Au contraire, une régulation qualifiée de séquentielle permettra une plus faible fluctuation de la température. Concrètement, une telle régulation signifie que la vanne en cours d'utilisation est fermée avant que la vanne de l'autre circuit ne soit ouverte. La régulation comprend donc plusieurs séquences. Dans un exemple dans lequel le dispositif de circulation d'air est mode aspiration c'est-à-dire que la température est augmentée, l'abaissement de la température se fait en fermant cette vanne d'aspiration. Si la fermeture de cette vanne est suffisante alors la vanne du circuit de soufflage n'est pas ouverte. Au contraire, si la température n'a pas baissé suffisamment avec la fermeture de la vanne d'aspiration, alors la vanne de soufflage est progressivement ouverte. Ainsi, l'étape de modification du flux d'évacuation des fumées comprend une séquence d'injection d'un flux additionnel s'additionnant audit flux d'évacuation et/ou une séquence d'injection d'un flux additionnel s'opposant audit flux d'évacuation.

Cela permet d'avoir une fréquence de régulation plus faible engendrant une courbe de régulation plus lisse pour optimiser la qualité des fibres.

## Revendications

1. Procédé de détermination de points spécifiques d'une assiette de fibrage (10) rotative utilisée dans un dispositif de fibrage (1), ledit procédé comprenant les étapes suivantes :
- Se munir de mesures de températures de l'assiette de fibrage obtenues au moyen d'un dispositif de mesure de la température (40) apte à prendre des mesures de températures de l'assiette selon plusieurs positions angulaires dudit dispositif de mesure pour fournir des données à au moins une unité de calcul (30, 45) qui construit une courbe représentative de la température en fonction de la position angulaire d'un dispositif de mesure de la température;
- Traiter lesdites mesures en effectuant un calcul de la dérivée seconde de la courbe de la température en fonction de la position angulaire par une unité de calcul (30);
- Rechercher au moins un point spécifique pour lequel la dérivée seconde remplit une condition prédéfinie, la condition prédéfinie consistant à avoir la valeur de la dérivée seconde égale à zéro.

2. Procédé de détermination selon la revendication précédente, comprenant une étape de recherche supplémentaire consistant à rechercher le point spécifique **caractérisé par le fait que** la température y est à son maximum.

3. Procédé de détermination selon l'une des revendications précédentes dans lequel les mesures de températures sont opérées pendant un intervalle régulier puis moyennées avant l'étape de traitement.

4. Procédé de détermination selon la revendication précédente, dans lequel ledit intervalle de prise de mesures est compris entre 2 et 5 secondes, préférentiellement de 3 secondes.

5. Procédé de contrôle de la fabrication de fibre minérale par un procédé de fibrage utilisant un dispositif de fibrage (1) pour fabriquer des fibres minérales, le dispositif de fibrage comprenant une assiette de fibrage (10) percée pour permettre générer des fibres par centrifugation et un bruleur annulaire (22) générant un courant gazeux annulaire pour étirer les fibres, ledit procédé comprenant les étapes suivantes :
- effectuer des mesures de températures de l'assiette de fibrage, au moyen d'un dispositif de mesure de la température (40), selon différentes positions angulaires du dispositif de mesure de la température;
- déterminer au moins un premier point spécifique utilisant le procédé de détermination selon l'une des revendications précédentes
- comparer la température mesurée à une valeur prédéterminée pour ledit au moins un premier point spécifique;
- générer au moins un premier signal de commande pour réguler la température de ladite assiette de fibrage audit au moins premier point spécifique au moyen d'un moyen de variation de la température.

6. Procédé de contrôle selon la revendication précédente, dans lequel un second point spécifique est déterminé et régulé.

7. Procédé de contrôle selon les revendications 5 ou 6, dans lequel le dispositif de fibrage comprend un premier moyen de variation de la température (50) du premier point spécifique.

8. Procédé de contrôle selon la revendication 6, dans lequel le dispositif de fibrage comprend un second moyen de variation de la température (60) du second point spécifique.

9. Procédé de contrôle selon la revendication précédente, dans lequel ladite assiette de fibrage (10, 10') comprend une paroi annulaire (10a, 10a') percée d'une pluralité d'orifices et prolongée latéralement par une partie supérieure (10b, 10c') et une partie inférieure (10c, 10b'), et dans lequel au moins un point spécifique est déterminé parmi le point de l'arrondi qui se trouve à la jonction entre la partie perforée de la bande périphérique et une partie supérieure prolongeant latéralement la bande périphérique, le point chaud correspondant au point où la température est la plus élevée et le point bas.

10. Procédé de contrôle selon la revendication précédente, dans lequel la régulation de la température est faite sur au moins deux des points spécifiques déterminés : le premier point spécifique étant le point bas et le second point spécifique étant le point de l'arrondi.

11. Programme d'ordinateur comportant des instructions pour l'exécution des étapes d'un procédé selon l'une quelconque des revendications 1 à 4 lorsque ledit programme est exécuté par un ordinateur.

12. Programme d'ordinateur comportant des instructions pour l'exécution des étapes d'un procédé selon l'une quelconque des revendications 5 à 10 lorsque ledit programme est exécuté par un ordinateur.

13. Support d'enregistrement lisible par un ordinateur sur lequel est enregistré un programme d'ordinateur comprenant des instructions pour l'exécution des étapes d'un procédé selon l'une quelconque des revendications 1 à 4.

14. Support d'enregistrement lisible par un ordinateur sur lequel est enregistré un programme d'ordinateur comprenant des instructions pour l'exécution des étapes d'un procédé selon l'une quelconque des revendications 5 à 10.

## Patentansprüche

1. Verfahren zum Bestimmen spezifischer Punkte einer rotierenden Zerfaserungsscheibe (10), die in einer Zerfaserungsvorrichtung (1) verwendet wird, das Verfahren umfassend die folgenden Schritte:
- sich Versehen mit Temperaturmessungen der Zerfaserungsscheibe, die mittels einer Temperaturmessvorrichtung (40) erhalten werden, die geeignet ist, um Temperaturmessungen der Scheibe gemäß mehreren Winkelpositionen der Messvorrichtung vorzunehmen, zum Bereitstellen von Daten an mindestens eine Recheneinheit (30, 45), die eine darstellende Kurve der Temperatur in Abhängigkeit von der Winkelposition einer Temperaturmessvorrichtung erstellt;
- Verarbeiten der Messungen durch Durchführen einer Berechnung der zweiten Ableitung der Kurve der Temperatur in Abhängigkeit von der Winkelposition durch eine Recheneinheit (30);
- Suchen mindestens eines spezifischen Punktes, für den die zweite Ableitung eine vordefinierte Bedingung erfüllt, wobei die vordefinierte Bedingung darin besteht, dass der Wert der zweiten Ableitung gleich null ist.

2. Verfahren zum Bestimmen nach dem vorstehenden Anspruch, umfassend einen zusätzlichen Suchschritt, bestehend aus der Suche nach dem spezifischen Punkt, **dadurch gekennzeichnet, dass** die Temperatur dort an ihrem Maximum ist.

3. Bestimmungsverfahren nach einem der vorstehenden Ansprüche, wobei die Temperaturmessungen während eines regelmäßigen Intervalls durchgeführt werden, dann vor dem Behandlungsschritt gemittelt werden.

4. Bestimmungsverfahren nach dem vorstehenden Anspruch, wobei das Messintervall zwischen 2 und 5 Sekunden liegt, vorzugsweise 3 Sekunden beträgt.

5. Verfahren zum Steuern der Herstellung von Mineralfaser durch ein Zerfaserungsverfahren unter Verwendung einer Zerfaserungsvorrichtung (1) zum Herstellen von Mineralfasern, die Zerfaserungsvorrichtung umfassend eine gelochte Zerfaserungsscheibe (10) zum Ermöglichen, dass durch Zentrifugation Fasern erzeugt werden, und einen ringförmigen Brenner (22), der einen ringförmigen Gasstrom zum Strecken der Fasern erzeugt, das Verfahren umfassend die folgenden Schritte:
- Durchführen von Temperaturmessungen der Zerfaserungsscheibe mittels einer Temperaturmessungsvorrichtung (40) gemäß verschiedenen Winkelpositionen der Temperaturmessungsvorrichtung;
- Bestimmen mindestens eines ersten spezifischen Punkts unter Verwendung des Bestimmungsverfahrens nach einem der vorstehenden Ansprüche
- Vergleichen der gemessenen Temperatur mit einem vorbestimmten Wert für den mindestens einen ersten spezifischen Punkt;
- Erzeugen mindestens eines ersten Steuersignals zum Regeln der Temperatur der Zerfaserungsscheibe an dem mindestens ersten spezifischen Punkt mittels eines Temperaturvariationsmittels.

6. Steuerungsverfahren nach dem vorstehenden Anspruch, wobei ein zweiter spezifischer Punkt bestimmt und geregelt wird.

7. Steuerungsverfahren nach Anspruch 5 oder 6, wobei die Zerfaserungsvorrichtung ein erstes Mittel (50) zum Variieren der Temperatur des ersten spezifischen Punktes umfasst.

8. Steuerungsverfahren nach Anspruch 6, wobei die Zerfaserungsvorrichtung ein zweites Mittel (60) zum Variieren der Temperatur des zweiten spezifischen Punktes umfasst.

9. Steuerungsverfahren nach dem vorstehenden Anspruch, wobei die Zerfaserungsscheibe (10, 10') eine ringförmige Wand (10a, 10a') umfasst, die mit einer Vielzahl von Öffnungen durchbohrt und seitlich durch einen oberen Teil (10b, 10c') und einen unteren Teil (10c, 10b') verlängert ist, und wobei mindestens ein spezifischer Punkt unter dem Punkt der Abrundung bestimmt wird, der sich an der Verbindung zwischen dem gelochten Teil des Umfangsbandes und einem oberen Teil, der das Umfangsband seitlich verlängert, dem heißen Punkt, der dem Punkt entspricht, wo die Temperatur am höchsten ist, und dem unteren Punkt befindet.

10. Steuerungsverfahren nach dem vorstehenden Anspruch, wobei die Temperaturregelung an mindestens zwei der bestimmten spezifischen Punkte erfolgt: wobei der erste spezifische Punkt der untere Punkt ist und der zweite spezifische Punkt der Punkt der Abrundung ist.

11. Computerprogramm, das Anweisungen für die Ausführung der Schritte eines Verfahrens nach einem der Ansprüche 1 bis 4 aufweist, wenn das Programm durch einen Computer ausgeführt wird.

12. Computerprogramm, das Anweisungen für die Ausführung der Schritte eines Verfahrens nach einem der Ansprüche 5 bis 10 aufweist, wenn das Programm durch einen Computer ausgeführt wird.

13. Computerlesbares Speichermedium, auf dem ein Computerprogramm gespeichert ist, umfassend Anweisungen für die Ausführung der Schritte eines Verfahrens nach einem der Ansprüche 1 bis 4.

14. Computerlesbares Speichermedium, auf dem ein Computerprogramm gespeichert ist, umfassend Anweisungen für die Ausführung der Schritte eines Verfahrens nach einem der Ansprüche 5 bis 10.

## Claims

1. Method of determination of specific points of a rotary fibre forming spinner wheel (10) used in a fibre forming device (1), said method comprising the following steps:
- obtaining measurements of temperatures of the fibre forming spinner wheel obtained by means of a temperature measuring device (40) adapted to take measurements of temperatures of the spinner wheel at a plurality of angular positions of said measuring device in order to supply data to at least one calculation unit (30, 45) that constructs a curve representing the temperature as a function of the angular position of a temperature measuring device;
- processing said measurements by effecting a calculation of the second derivative of the curve of the temperature as a function of the angular position by means of a calculation unit (30);
- searching for at least one specific point for which the second derivative satisfies a predefined condition, the predefined conditions consisting in having the value of the second derivative equal to zero.

2. Determination method according to the preceding claim, comprising an additional searching step consisting in searching for the specific point **characterized by** the fact that the temperature there is at its maximum.

3. Determination method according to any one of the preceding claims, wherein the measurements of temperatures are taken during a regular interval and then averaged before the processing step.

4. Determination method according to the preceding claim, wherein said measurement taking interval is between 2 and 5 seconds inclusive, preferably 3 seconds.

5. Method of controlling the fabrication of mineral fibre by a fibre forming method using a fibre forming device (1) to fabricate mineral fibres, the fibre forming device comprising a fibre forming spinner wheel (10) pierced to enable centrifugal generation of fibres and an annular burner (22) generating an annular gas flow to stretch the fibres, said method comprising the following steps:
- effecting measurements of temperatures of the fibre forming spinner wheel by means of a temperature measuring device (40) at different annular positions of the temperature measuring device;
- determining at least one first specific point using the determination method according to any one of the preceding claims;
- comparing the measured temperature to a predetermined value for said at least one first specific point;
- generating at least one first control signal for regulating the temperature of said fibre forming spinner wheel at said at least one first specific point by means of a temperature variation means.

6. Control method according to the preceding claim wherein a second specific point is determined and regulated.

7. Control method according to Claim 5 or 6, wherein the fibre forming device comprises a first means (50) for variation of the temperature of the first specific point.

8. Control method according to Claim 6, wherein the fibre forming device comprises a second means (60) for variation of the temperature of the second specific point.

9. Control method according to the preceding claim, wherein the fibre forming spinner wheel (10, 10') comprises an annular wall (10a, 10a') pierced by a series of orifices and extended laterally by an upper part (10b, 10c') and a lower part (10c, 10b') and in which at least one specific point is determined from the point of the round-off that is found at the junction between the perforated part of the peripheral strip and an upper part extending the peripheral strip laterally, the hot spot corresponding to the point at which the temperature is the highest and the bottom point.

10. Control method according to the preceding claim, wherein the temperature is regulated at two at least of the specific points that have been determined: the first specific point being the bottom point and the second specific point being the point of the round-off.

11. Computer program including instructions for the execution of the steps of a method according to any one of Claims 1 to 4 when said program is executed by a computer.

12. Computer program including instructions for the execution of the steps of a method according to any one of Claims 5 to 10 when said program is executed by a computer.

13. Computer-readable storage medium on which is stored a computer program including instructions for the execution of the steps of a method according to any one of Claims 1 to 4 when said program is executed by a computer.

14. Computer-readable storage medium on which is stored a computer program including instructions for the execution of the steps of a method according to any one of Claims 5 to 10 when said program is executed by a computer.
